# EUROPÄISCHE PATENTSCHRIFT

(11) **EP 1 226 015 B1**
(45) Veröffentlichungstag und Bekanntmachung des Hinweises auf die Patenterteilung: **02.05.2003**
(21) Anmeldenummer: 00940308.0
(22) Anmeldetag: 02.06.2000
(51) Int. Cl.: B29C 49/14

(54) **VERFAHREN ZUR HERSTELLUNG VON TUBENFÖRMIGEN BEHÄLTERN**
METHOD FOR PRODUCING TUBULAR CONTAINERS
PROCEDE DE PRODUCTION DE CONTENANTS TUBULAIRES

(30) Priorität: 04.06.1999 DE 19925695
(43) Veröffentlichungstag der Anmeldung: 31.07.2002
(73) Patentinhaber: AISA AUTOMATION INDUSTRIELLE SA, 1896 Vouvry (CH)
(72) Erfinder: KELLER, Gerhard, CH-1805 Jongny (CH)
(74) Vertreter: Patentanwälte Zellentin & Partner
(86) Internationale Anmeldenummer: EP0005082
(87) Internationale Veröffentlichungsnummer: WO00074924

(56) Entgegenhaltungen:
- FR-A- 1 403 746
- NL-A- 279 815
- US-A- 3 855 380
- US-A- 4 782 728
- US-A- 4 988 399

## Beschreibung

Die Erfindung betrifft ein Verfahren zur Herstellung von Behältern durch separates Herstellen einer Preform mit einem Hals mit endgültigen Abmessungen und einem rohrförmigen Körper mit in Relation zur vorgesehenen endgültigen Form geringeren Abmessungen, Erwärmen der Preform, Befestigen der Preform im Halsbereich an einem Ziehkopf, Einführen der Preform mit dem Ziehkopf in das Innere einer mehrteiligen schließbaren Blasform, axiales Ziehen der Preform mittels des Ziehkopfs und Weiten der Preform durch Zufuhr von Blasluft in deren Inneres, Aushärten des an der Wandung der Blasform anliegenden Behälters, Öffnen der Blasform und Entfernen des Behälters, wie es aus der US-A-4 988 399 bekannt ist.

Gemäß diesem bekannten Verfahren werden in einem Arbeitsgang zwei identische Behälterteile durch mittiges Trennen aus einer beidseitig offenen Preform hergestellten Zwischenform hergestellt, wonach beide Behälterteile zu fertigen Behältern mit je einem Boden versehen werden.

Aus der DE 37 04 264 A1 ist die Herstellung eines einerends offenen und anderends geschlossenen Kunststoff-Hohlkörpers bekannt Hierbei werden zwei komplett verschiedene Techniken, wie das Spritzen einerseits und das Blasen andererseits auf ein und derselben Maschine durchgeführt, wobei zu berücksichtigen ist, daß für das Spritzen wesentlich längere Zeiten benötigt werden als für das Blasen, was sich auf das gemeinsame Herstellen in einer Maschine auswirkt. Mittels einer Düse wird kontinuierlich ein Schlauch durch Entfernen einer Abzugsvorrichtung von der kunststoffzuführenden Düse gezogen wird, der dabei aufgrund zugeführter Blasluft schon etwas aufgeweitet wird. Erst wenn die zustellbaren Blasformteile geschlossen werden können, d. h. wenn ein ausreichender Abstand zwischen der Abzugseinrichtung und der Düse besteht, durch die die Zufuhr von Kunststoff und Blasluft erfolgt, wird nur noch Blasluft zur Ausweitung des extrudierten Rohrabschnitts zugeführt.

Aufgabe der Erfindung ist es, ein Verfahren zur Herstellung von tubenförmigen wieder verschließbaren Behältern mit Verschlüssen anzugeben, das auf einfache Weise die Herstellung beliebiger Formen tubenförmiger Behälter gestattet, auch mit geschlossener Ausgabeöffnung.

Diese Aufgabe wird durch ein Verfahren mit den Merkmalen des Anspruchs 1 gelöst.

Vorteilhafte Ausgestaltungen der Erfindung sind den Unteransprüchen zu entnehmen.

Nachstehend wird die Erfindung anhand von Ausführungsbeispielen unter Bezug auf Zeichnungen näher erläutert. Es zeigt:
- Fig. 1: verschiedene Preformen, darunter auch solche mit einem außenliegenden Flansch,
- Fig. 2: Querschnitte von Preformen,
- Fig. 3: die Verbindung einer Preform mit verschiedenen Ziehköpfen,
- Fig. 4: das Erwärmen einer Preform durch Strahlungswärme und Heißluft,
- Fig. 5: das Einführen einer Preform mittels des Ziehkopfes in eine offene Blasform und das Zuführen einer Blasluftdüse,
- Fig. 6: das Schließen der Blasform mit nachfolgendem Anfahren einer Blasdüse an das offene Preformende,
- Fig. 7: das Streckziehen und das Vorblasen einer Preform,
- Fig. 8: Strecken und Blasen von Preformen mit und ohne Flansch,
- Fig. 9: das Entgasen bzw. Entlüften des in der Blasform verbleibenden fertigen Behälters,
- Fig. 10: das Öffnen der Blasform und das Entfernung der Blasdüse,
- Fig. 11: zwei Ausführungsformen zur Entfernung des unvollständig verformten Endes eines fertigen tubenförmigen Behälters, wobei bei einer Ausführungsform mit der Entfernung des Endes gleichzeitig eine Durchgangsöffnung im Tubenhals hergestellt wird,
- Fig. 12: das Entfernen des fertigen Behälters aus dem Ziehkopf,

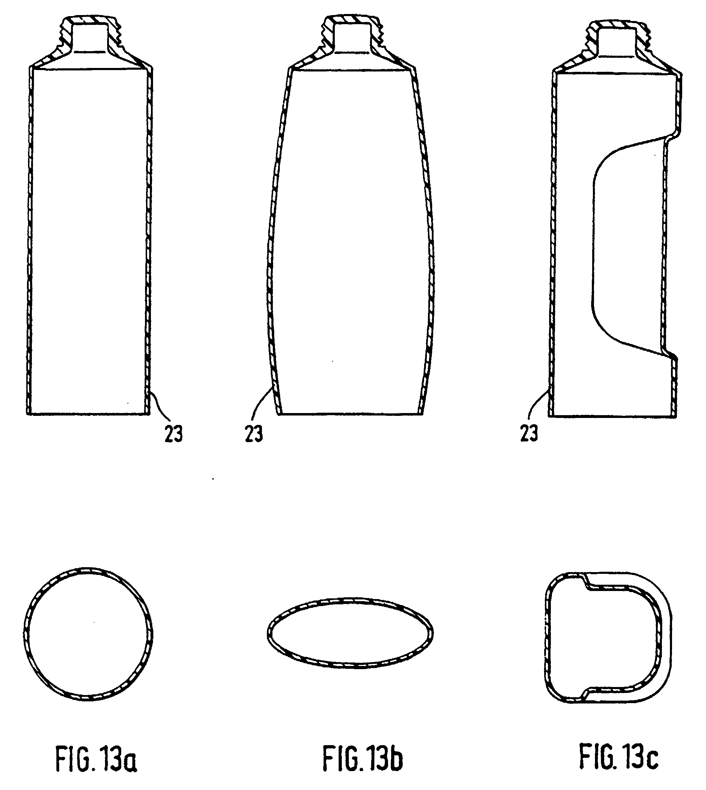

- Fig. 13: Ausführungsformen von tubenförmigen Behältern in Seitenansicht nebst Querscbnitten.

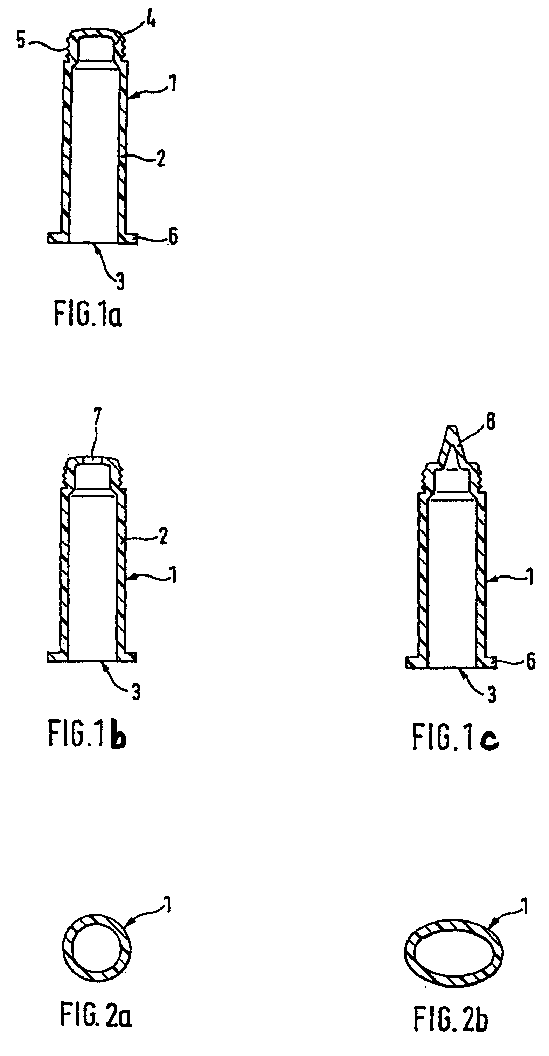

In Fig. 1 sind drei Preformen dargestellt, die jeweils in getrennten Verfahren hergestellt sind. In Fig.1a weist die Preform 1 einen rohrförmigen Körper 2 mit einem offenen Ende 3 auf. Am anderen Ende weist der rohrförmige Körper 2 einen Hals 4 mit für den fertigen Behälter benötigten Abmessungen auf, die so durch die Preform äußerst präzise und reproduzierbar einzuhalten sind, was bei Verschlüssen von besonderer Bedeutung ist. Bei der in Fig. 1a dargestellten Preform ist der Hals 4 verschlossen und weist ein Außengewinde 5 auf, wobei sein rohrförmiger Körper 2 an seinem offenen Ende 3 einen außenliegenden ringförmigen Flansch 6 aufweist. Die in Fig. 1b dargestellte Preform entspricht der in Fig. 1a dargestellten, wobei jedoch im Hals 4 eine zentrale Ausgabeöffnung 7 ausgeführt ist. Das in Fig. 1c dargestellte Ausführungsbeispiel entspricht dem in Fig. 1a dargestellten, wobei der Hals 4 auch verschlossen ist, jedoch eine konische Kanüle 8 aufweist.

Gemäß den in Fig. 2 dargestellten Ausführungsbeispielen können die Preformen 1 einen ringförmigen oder ovalen Querschnitt aufweisen. Darüber hinaus sind auch kantige, z. B. drei- oder mehreckige Querschnitte - vorzugsweise mit gerundeten Ecken - möglich (nicht dargestellt). Weiterhin können über den gesamten Querschnitt gleiche oder auch unterschiedliche Wandstärken vorgesehen werden. Es ist z. B. möglich einen Behälter mit ovalem Querschnitt und gleichmäßiger Wandstärke aus einer Preform mit rundem Querschnitt und ungleichmäßigen Wandstärken herzustellen.

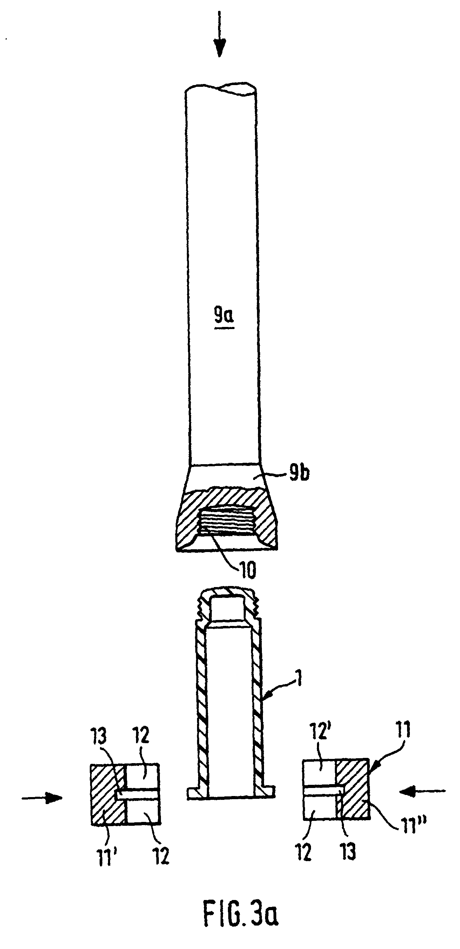

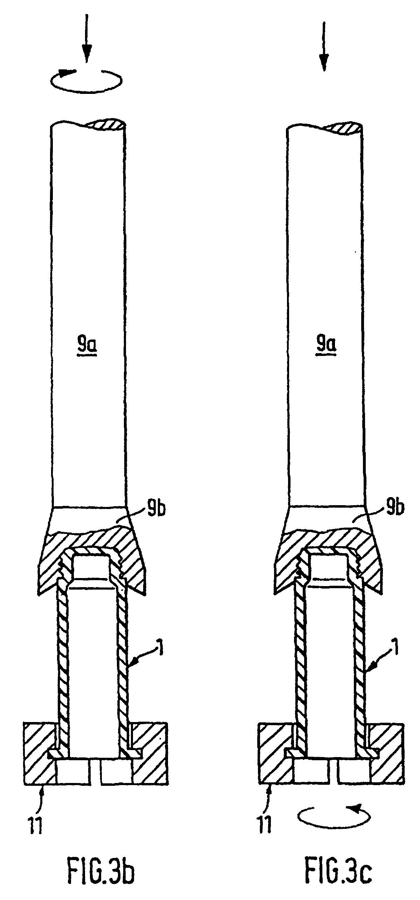

In Fig. 3a ist eine Preform 1 gemäß Fig. 1a dargestellt, der eine Zugstange 9a mit Ziehkopf 9b sowie ein zweigeteilter Halter 11 zuführbar sind, letzterer kann auch zur Aufnahme von Drehmomenten bei einem Schraubvorgang dienen. Bei diesem Ausführungsbeispiel weist der Ziehkopf 9b ein Innengewinde 10 auf, das dem Außengewinde 5 des Halses 4 entspricht. Der Halter 11 weist eine zentrale Öffnung 12, 12' auf, die dem Außendurchmesser des rohrförmigen Körpers 2 der Preform 1 entspricht. Innerhalb der Halterhälften 11', 11" ist eine ringförmige Nut 13 ausgeführt, die zur Aufnahme des Flansches 6 der Preform 1 dient. In Fig. 3b und c sind mögliche Verbindungen einer Preform 1 mit einem Ziehkopf 9b dargestellt, wobei gemäß Fig. 3b die Preform 1 fest und der Ziehkopf 9b drehbar und gemäß Fig. 3c der Ziehkopf 9b nicht drehbar und die Preform 1 mit dem Halter 11 drehbar angeordnet sind.

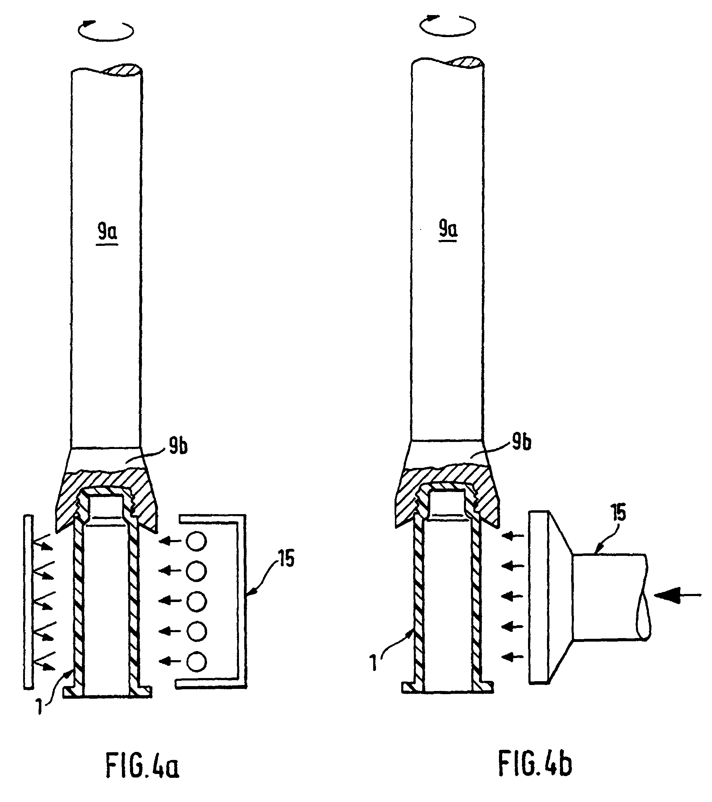

Jede an einem Ziehkopf 9b befestigte Preforml wird dann einer Heizvorrichtung 14, die auch eine Heizkammer sein kann (s. Fig. 4a und b) zugeführt, die beliebig gestaltet sein kann. Als Heizquelle kommt vorzugsweise Strahlungswärme (z. B. Infrarotstrahlung) zur Anwendung, es ist aber beispielsweise auch die Anwendung von Heißluft, Ultraschall oder Mikrowellen möglich, wobei die Erwärmung des rohrförmigen Körpers 2 einer Preform 1 über Höhe und Umfang beliebig gleichmäßig oder ungleichmäßig erfolgen kann.

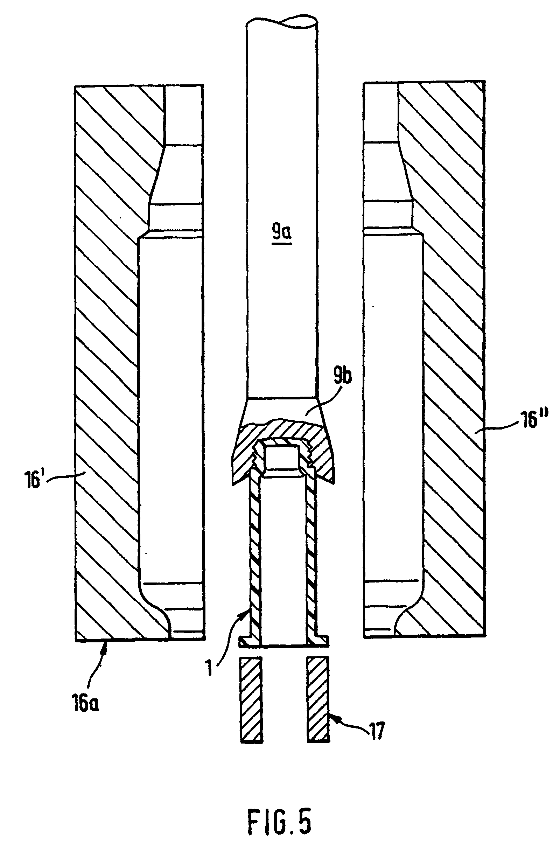

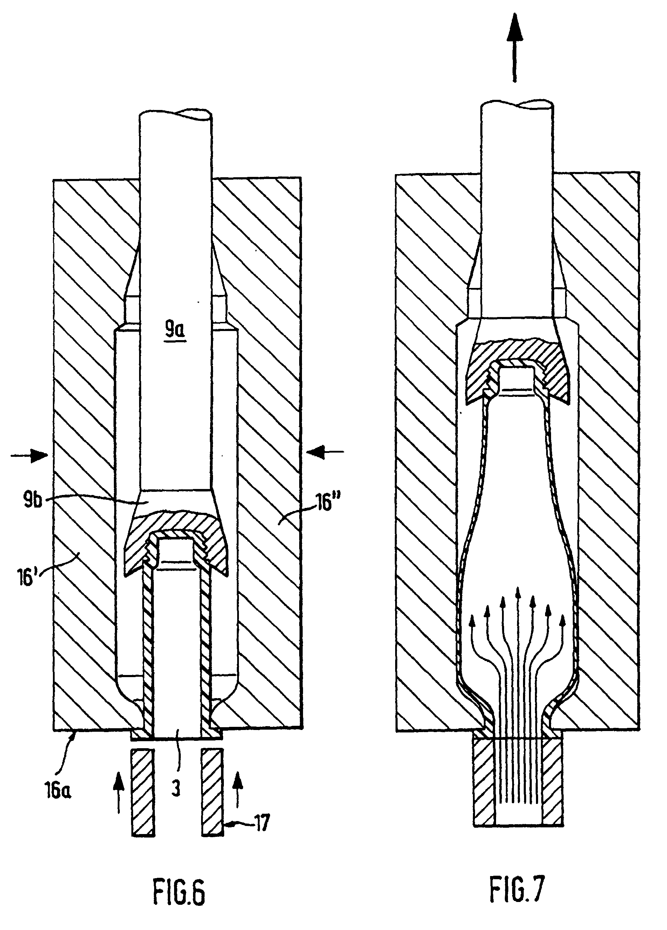

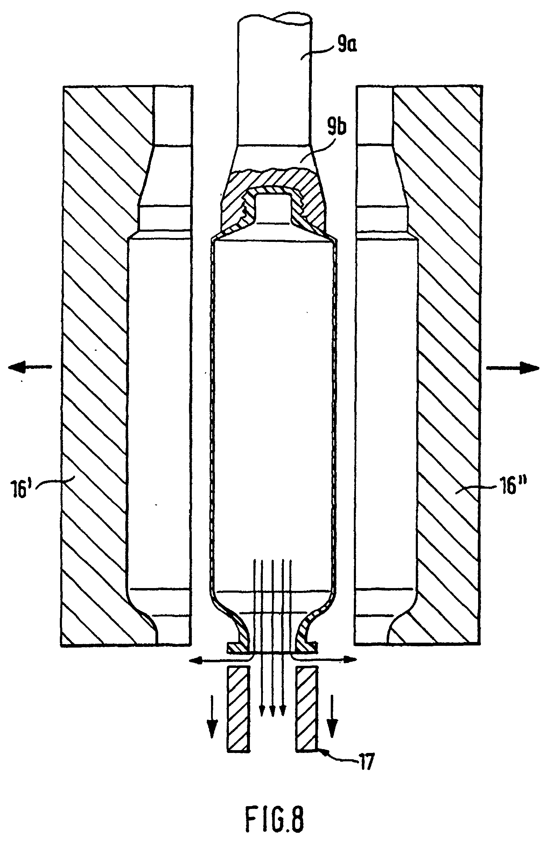

Die am Ziehkopf 9b befestigte erwärmte Preform 1 wird in das Innere einer im Ausführungsbeispiel zweigeteilten Blasform 16 (s. Fig. 5) zugeführt, wobei die Blasformhälften 16', 16" im geschlossenen Zustand (s. Fig. 6) es ermöglichen, daß sich der Flansch 6 der Preform 1 am unteren äußeren Ende der geschlossenen Blasform 16 abstützt. Dem unteren offenen Ende 5 der abgestützten Preform 1 wird abgedichtet gegenüber dem Flansch 6 eine Blasdüse 17 zugeführt, deren Durchmesser vorzugsweise dem Durchmesser des rohrförmigen Körpers 2 angepaßt ist.

Wie aus Fig. 6 ersichtlich, ist das innere obere Ende der geschlossenen Blasform 16 entsprechend dem Äußeren des Ziehkopfes 9b angepaßt, d. h. der Ziehkopf 9b bildet in seiner oberen Endstellung einen Teil der Blasform 16.

In Fig. 7 ist ein Durchgangsstadium des Vorgangs des Streckziehens mittels des aufwärts bewegten Ziehkopfs (s. den Pfeil) und unter Zufuhr von Druckluft (unter Vorblasdruck) dargestellt.

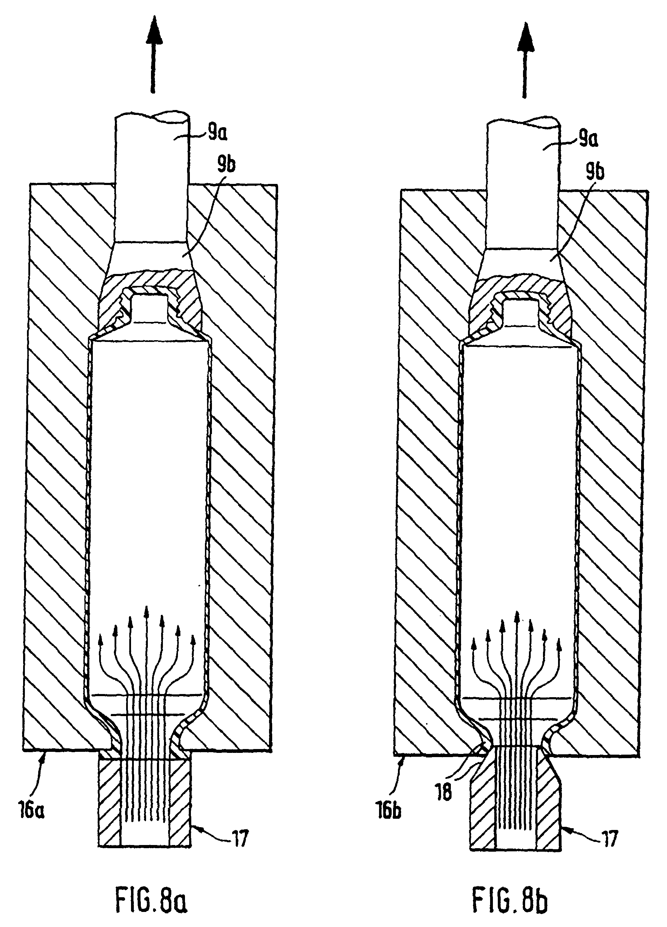

In Fig. 8 hat bereits das Ziehen der Zugstange 9a, durch die der Ziehkopf 9b in seine obere einen Teil der Blasform 16 bildende Endstellung und ein Strecken der Preform durch Zufuhr von Blasluft mit vorzugsweise gegenüber dem Vorblasdruck erhöhtem Druck in die endgültige Form stattgefunden, die durch die Blasform 16a vorgegeben ist. In Fig. 7b ist eine Blasform 16b mit einem unteren nach außen sich öffnenden konisch gestalteten Bereich 19 vorgesehen, der dazu dient, das untere offene Ende 3 einer Preform 1 auch ohne Flansch mittels einer entsprechend konisch gestalteten Außenform einer Blasdüse 17' festzuklemmen, damit beim Ziehen des Ziehkopfes 9b in Pfeilrichtung das untere offene Ende 3 der Preform 1 auch sicher eingeklemmt ortsfest gehalten wird.

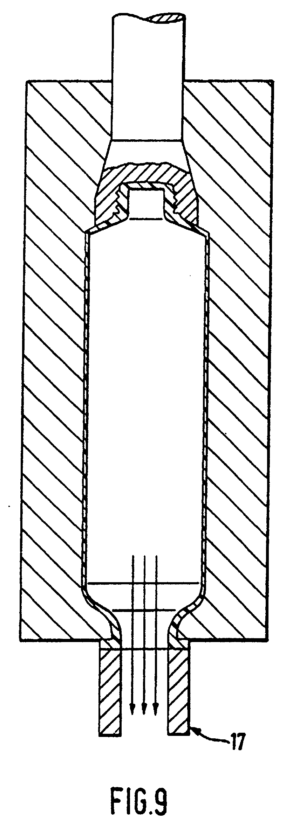

In Fig. 9 ist das Entgasen bzw. das Entlüften des fertig geformten Behälterrohlings dargestellt, das durch die zugestellt verbleibende Blasdüse 17 solange erfolgt (s. die Pfeile) bis der Innendruck abgebaut ist.

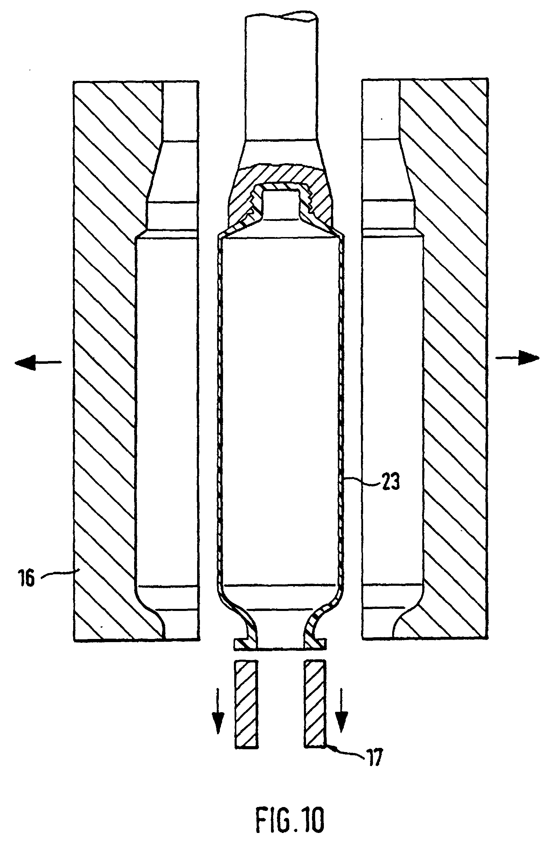

In Fig. 10 ist das Öffnen der Blasform 16 und das Entfernen der Blasdüse 17 dargestellt, wobei durch das vorangegangene Entgasen im Inneren des geformten Behälters 23 wieder atmosphärischer Druck besteht.

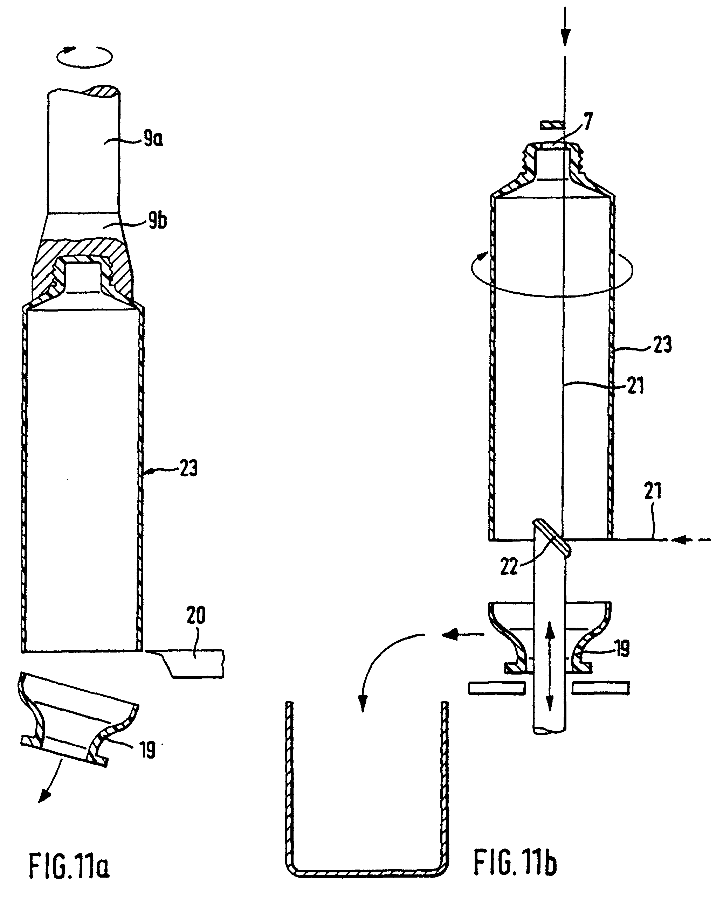

Der fertige Behälter weist am unteren Ende ein Endteil 19 auf, das nicht vollständig aufgeblasen bzw. gestreckt ist und das nicht die gewünschten endgültigen Abmessungen des hergestellten Behälters aufweist. Dieser "unvollständig" geformte Endteil 19 wird durch Schneiden mittels eines Messers 20 (s. Fig. 11a) oder mittels eines Laserstrahls 21 (s. Fig. 11b) abgetrennt. Durch diesen Schnitt kann der fertige Behälter 23 auch die jeweils gewünschte Länge erhalten. Durch einen Laserstrahl 21 kann mittels eines Spiegels 22 gleichzeitig mit dem Abtrennen des Endteils 19 auch im verschlossenen Hals 4 eine Ausgabeöffnung 7 hergestellt werden (gebrochener Pfeil) oder zuerst eine Ausgabeöffnung 7 hergestellt und dann das Abtrennen des Endteils 19 (ausgezogener Pfeil) erfolgen. Entsprechendes gilt für eine Öffnung in einer Preform 1 mit einer Kanüle 8 (s. Fig. 1d).

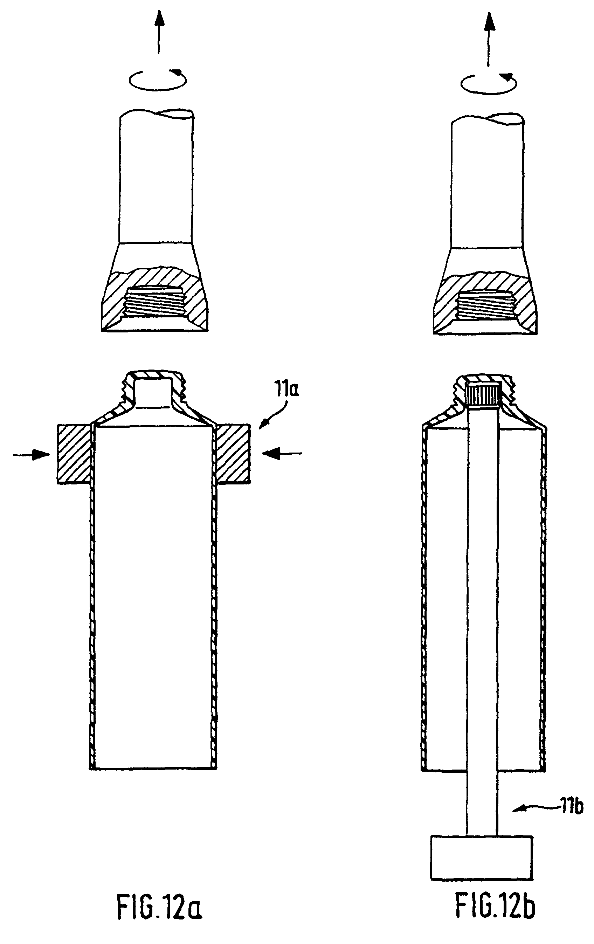

In einem weiteren Schritt wird durch relative Drehung zwischen Ziehkopf 9b und hergestelltem Behälter 23 bzw. durch Öffnen der Klauen 14 der fertige Behälter 23 aus dem Ziehkopf 9b entfernt, wobei zur Aufnahme von Drehmomenten ein Halter 11a in Form von zwei zustellbaren Haltebacken (s. Fig. 12a) oder ein Halter 11b in Form eines in das Innere des Behälters eingefahrenen Haltestabes (s. Fig. 12b) vorgesehen sein kann, die ein Mitdrehen des Behälters verhindern sollen.

In Fig. 11 sind drei verschiedene Formen von tubenförmigen Behältern 23 sowie drei mögliche Querschnittsformen dargestellt. In Fig. 11a ist ein tubenförmiger Behälter mit kreisrundem Querschnitt, in Fig.11b ein über die Höhe unterschiedliche Querschnitte aufweisender bauchiger tubenförmiger Behälter mit ovalem Querschnitt und in Fig. 11c ein kantiger Behälter mit gerundeten Ecken und über die Höhe eingeformter Griffmulde mit einem kantigen Querschnitt dargestellt. Mit diesen wenigen Beispielen soll nur dargelegt werden, daß durch das neue Verfahren beliebige Formen von Behältern und Querschnitten auch unter Verwendung von Wülsten, von hervorragenden oder vertieften Reliefs, mit Griffmulden usw. herstellbar sind, was den Anwendungsbereich gegenüber herkömmlichen Verfahren zur Herstellung von tubenförmigen Behältern außerordentlich erweitert.

Zur Durchführung des Verfahrens eignen sich Materialien, wie PET = Polyäthylenterephthalat, PEN = Polyäthylennaphthalat, PEP = Polypropylen und Mischungen aus PET/PEN, wobei die Aufzählung der Materialien nicht abschließend ist.

Es besteht weiter die Möglichkeit, in die geöffnete Blasform 16a, b ein oder mehrere Etiketten einzuführen, die dann am Ende fest mit dem fertigen Behälter 23 verbunden sind, was gegebenenfalls einen separaten Etikettiervorgang einspart.

Nachstehend wird ein konkretes Ausführungsbeispiel zur Herstellung einer Tube aus PET = Polyäthylenterephthalat mit einem Durchmesser von 50 mm und einer Länge von 200 mm angegeben. Die jeweiligen Preforms mit einem Durchmesser von 28 mm, einer Wandstärke von 3 mm, und einer Höhe von 66 mm mit oder ohne Wulste werden auf 90 bis 100°C erwärmt, und zwar nur in den Zonen, wo sie gestreckt und geblasen werden müssen. Das Ziehstrecken erfolgt mit einer Geschwindigkeit von 0,3 - 0,5 m/sec, wobei ein Vorblasdruck von 3 bis 10 bar durch Zufuhr von Blasluft durch die Blasdüse 17 eingehalten wird. Anschließend wird mit einem erhöhten Blasdruck von 30 bis 40 bar die Anformung des Preformlings an der Wandung der Blasform 16a; 16b bewirkt. Gleichzeitig wird die Blasform 16a; 16b auf ca. 10 °C gekühlt, wobei die Kühlzeit der Einwirkzeit des Blasdrucks bei 30 bis 40 bar entspricht. Sie beträgt etwa 0,8 bis 1,2 sec. Die Entlüftung der fertigen Tube dauert etwa 0,3 bis 0,4 sec, wobei im Ergebnis eine Wandstärke der fertigen Tube von 0,15 bis 0,4 mm erzielt wird.

## Patentansprüche

1. Verfahren zur Herstellung von Behältern (23) durch separates Herstellen einer Preform (1) mit einem Hals (4) mit endgültigen Abmessungen und einem rohrförmigen Körper (2) mit in Relation zur vorgesehenen endgültigen Form geringeren Abmessungen, Erwärmen der Preform (1), Befestigen der Preform (1) im Halsbereich an einem Ziehkopf (9b), Einführen der Preform (1) mit dem Ziehkopf (9b) in das Innere einer mehrteiligen schließbaren Blasform (16a; 16b), axiales Ziehen der Preform (1) mittels des Ziehkopfs (9b) und Weiten der Preform (1) durch Zufuhr von Blasluft in deren Inneres, Aushärten des an der Wandung der Blasform (16a; 16b) anliegenden Behälters, öffnen der Blasform und Entfernen des Behälters
**dadurch gekennzeichnet, daß** zur Herstellung eines tubenförmigen Behälters (23) die Preform (1) an einem Ende einen Verschluß und am anderen Ende eine offene Befüllöffnung (3) mit einem außenliegenden vorspringenden Flansch (6) aufweist und die Preform (1) relativ gegeneinander drehbar mit dem Ziehkopf (9b) verbunden wird, wobei die Zufuhr von Blasluft mittels einer am offenen Ende der Befüllöffnung (3) abgedichtet angeordneten Blasdüse (17) erfolgt, wobei der Flansch (6) an der Blasdüse (17) klemmend gehalten ist und daß der nicht vollständig aufgeblasene bzw. gestreckte untere Endteil (19) des hergestellten Behälters (23) abgetrennt bzw. abgelängt wird.

2. Verfahren zur Herstellung von tubenförmigen Behältern (23) nach Anspruch 1, **dadurch gekennzeichnet, daß** die Preform (1) im Hals (4) eine Ausgabeöffnung (7) aufweist.

3. Verfahren zur Herstellung von tubenförmigen Behältern (23) nach Anspruch 2, **dadurch gekennzeichnet, daß** die Ausgabeöffnung (7) nach Fertigstellung der Behälterform hergestellt wird.

4. Verfahren zur Herstellung von tubenförmigen Behältern (23) nach einem der Ansprüche 1 bis 3,
**dadurch gekennzeichnet, daß** das Abtrennen des unvollständig verformten Endteils (19) durch ein Messer (20) erfolgt.

5. Verfahren zur Herstellung von tubenförmigen Behältern (23) nach einem der Ansprüche 1 bis 3,
**dadurch gekennzeichnet, daß** das Abtrennen des unvollständig verformten Endteils (19) mittels Laserstrahlen (21) erfolgt.

6. Verfahren zur Herstellung von tubenförmigen Behältern (23) nach Anspruch 3 und Anspruch 5,
**dadurch gekennzeichnet, daß** die Herstellung der Ausgabeöffnung (7) und das Abtrennen des unvollständig verformten Endteils (19) in einem Arbeitsgang unter Verwendung einer Umlenkoptik mittels Laserstrahlen (21) erfolgt.

7. Verfahren zur Herstellung von tubenförmigen Behältern (23) nach einem der Ansprüche 1 bis 6,
**dadurch gekennzeichnet, daß** der Hals (4) mittels eines Außengewindes (5) an einem Innengewinde (10) des Ziehkopfs (9b) befestigbar ist.

8. Verfahren zur Herstellung von tubenförmigen Behältern (23) nach einem der Ansprüche 1 bis 7,
**dadurch gekennzeichnet, daß** die Erwärmung über die Höhe und/oder den Umfang der Preform (1) ungleichmäßig erfolgt.

9. Verfahren zur Herstellung von tubenförmigen Behältern (23) nach einem der Ansprüche 1 bis 8,
**dadurch gekennzeichnet, daß** die Erwärmung der Preform (1) durch Strahlungswärme und/oder Heißluft und/oder Ultraschall und/oder Mikrowellen erfolgt.

10. Verfahren zur Herstellung von tubenförmigen Behältern (23) nach einem der Ansprüche 1 bis 9,
**dadurch gekennzeichnet, daß** das axiale Ziehen unter Zufuhr von Blasluft zweistufig durch ein Vorblasen mit einem Druck von 3 bis 10 bar und anschließend mit einem erhöhten Blasdruck von 30 bis 40 bar erfolgt.

11. Verfahren zur Herstellung von tubenförmigen Behältern (23) nach Anspruch 10, **dadurch gekennzeichnet, daß** nach Erreichen der Endposition des Ziehkopfs (9b) in der Blasform (16a; 16b) der Blasdruck auf bis zu 40 bar erhöht wird.

12. Verfahren zur Herstellung von tubenförmigen Behältern (23) nach einem der Ansprüche 1 bis 11,
**dadurch gekennzeichnet, daß** in eine geöffnete Blasform (16a; 16b) ein Etikett eingeführt wird.

## Claims

1. Method for producing containers (23) by separate production of a preform (1) with a neck (4) with definitive dimensions and a tubular body (2) with smaller dimensions relative to the proposed definitive form, heating the preform (1), fastening the preform (1) in the neck region on a drawing head (9b), introduction of the preform (1) with the drawing head (9b) into the interior of a multi-part closable blow mould (16a; 16b), axial drawing of the preform (1) by means of the drawing head (9b) and expansion of the preform (1) by the supply of blowing air into the interior thereof, curing the container resting on the wall of the blow mould (16a; 16b), aperture the blow mould and removing the container, **characterised in that** to produce a tubular container (23) the preform (1) comprises at one end a closure and at the other end an open filling aperture (3) with an exterior projecting flange (6) and the preform (1) is connected to the drawing head (9b) in a rotatable manner relative to one another, the blowing air being supplied by means of a blow nozzle (17) arranged in a sealed manner at the open end of the filling aperture (3), the flange (6) being held in a clamped manner on the blow nozzle (17) and **in that** the incompletely inflated or stretched lower end part (19) of the container (23) produced is separated or cut to length.

2. Method for producing tubular containers (23) according to claim 1, **characterised in that** the preform (1) comprises a discharge aperture (7) in the neck (4).

3. Method for producing tubular containers (23) according to claim 2, **characterised in that** the discharge aperture (7) is produced after completion of the container mould.

4. Method for producing tubular containers (23) according to any one of claims 1 to 3, **characterised in that** the incompletely formed end part (19) is separated by a blade (20).

5. Method for producing tubular containers (23) according to any one of claims 1 to 3, **characterised in that** the incompletely formed end part (19) is separated by means of laser beams (21).

6. Method for producing tubular containers (23) according to claim 3 and 5, **characterised in that** the production of the discharge aperture (7) and the separation of the incompletely formed end part (19) take place in one operation using deflecting optics by means of laser beams (21).

7. Method for producing tubular containers (23) according to any one of claims 1 to 6, **characterised in that** the neck (4) can be fastened by means of an external thread (5) to an internal thread (10) of the drawing head (9b).

8. Method for producing tubular containers (23) according to any one of claims 1 to 7, **characterised in that** heating takes place irregularly over the height and or periphery of the preform (1).

9. Method for producing tubular contains (23) according to any one of claims 1 to 8, **characterised in that** the preform (1) is heated by radiant heat and/or hot air and/or ultrasound and/or microwaves.

10. Method for producing tubular containers (23) according to any one of claims 1 to 9, **characterised in that** the axial drawing takes place with the supply of blowing air in two stages by pre-blowing at a pressure of 3 to 10 bar and then at an increased blowing pressure of 30 to 40 bar.

11. Method for producing tubular containers (23) according to claim 10, **characterised in that** the blowing pressure is increased to 40 bar after the end position of the drawing head (9b) in the blow mould (16a; 16b) has been reached.

12. Method for producing tubular containers (23) according to any one of claims 1 to 11, **characterised in that** a label is introduced into an opened blow mould (16a; 16b).

## Revendications

1. Procédé de production de récipients (23) comprenant les étapes de production séparée d'une préforme (1) comportant un col (4) à dimensions définitives et un corps tubulaire (2) ayant des dimensions réduites par rapport à la forme définitive prévue, d'échauffement de la préforme (1), de fixation de la préforme (1) dans la région du col sur une tête d'étirage (9b), d'introduction de la préforme (1) avec la tête d'étirage (9b) à l'intérieur d'un moule de soufflage à fermeture à coins (16a; 16b), d'étirage axial de la préforme (1) par l'intermédiaire de la tête d'étirage (9b) et d'élargissement de la préforme (1) par amenée d'air de soufflage dans l'intérieur de celle-ci, de durcissement du récipient reposant contre la paroi du moule de soufflage (16a, 16b), d'ouverture du moule de soufflage et de retrait du récipient
**caractérisé en ce qu'**en vue de la production d'un récipient tubulaire (23), la préforme (1) comporte au niveau d'une extrémité une fermeture et au niveau de l'autre extrémité une ouverture de remplissage ouverte (3) avec une bride externe en saillie (6), la préforme (1) étant reliée à la tête d'étirage (9b) de sorte à permettre une rotation relative, l'amenée d'air de soufflage par l'intermédiaire d'une buse soufflante (17) agencée de manière étanche sur l'extrémité ouverte de l'ouverture de remplissage (3), la bride (6) étant retenue sur la buse soufflante (17) par serrage, la partie d'extrémité (19) inférieure non complètement gonflée ou étirée du récipient produit (23) étant séparée ou découpée à longueur.

2. Procédé de production de récipients tubulaires (23) selon la revendication 1, **caractérisé en ce que** la préforme (1) comporte une ouverture de sortie (7) dans le col (4).

3. Procédé de production de récipients tubulaires (23) selon la revendication 2, **caractérisé en ce que** l'ouverture de sortie (7) est formée après l'achèvement de la forme du récipient.

4. Procédé de production de récipients tubulaires (23) selon l'une des revendications 1 à 3, **caractérisé en ce que** la séparation de la partie d'extrémité non complètement formée (19) est effectuée par un couteau (20).

5. Procédé de production de récipients tubulaires (23) selon l'une des revendications 1 à 3, **caractérisé en ce que** la séparation de la partie d'extrémité non complètement formée (19) est effectuée par des rayons laser (21).

6. Procédé de production de récipients tubulaires (23) selon les revendications 3 et 5, **caractérisé en ce que** la fabrication de l'ouverture de sortie (7) et la séparation de la partie d'extrémité non complètement formée (19) sont effectuées dans le cadre d'une opération avec utilisation d'une optique de déviation par l'intermédiaire de rayons laser (21).

7. Procédé de production de récipients tubulaires (23) selon l'une des revendications 1 à 6, **caractérisé en ce que** le col (4) peut être fixé par l'intermédiaire d'un filetage mâle (5) sur un filetage femelle (10) de la tête d'étirage (9b).

8. Procédé de production de récipients tubulaires (23) selon l'une des revendications 1 à 7, **caractérisé en ce que** l'échauffement est irrégulier à travers la hauteur et/ou la circonférence de la préforme (1).

9. Procédé de production de récipients tubulaires (23) selon l'une des revendications 1 à 8, **caractérisé en ce que** l'échauffement de la préforme (1) et effectué par de la chaleur de rayonnement et/ou de l'air chaud et/ou par ultrasons et /ou par micro-ondes.

10. Procédé de production de récipients tubulaires (23) selon l'une des revendications 1 à 9, **caractérisé en ce que** l'étirage axial en présence d'amenée d'air de soufflage se fait en deux étapes, par présoufflage en présence d'une pression comprise entre 3 et 10 bars et ensuite en présence d'une pression de soufflage accrue, comprise entre 30 et 40 bars.

11. Procédé de production de récipients tubulaires (23) selon la revendication 10, **caractérisé en ce qu'**après l'atteinte de la positon finale de la tête d'étirage (9b) dans le moule de soufflage (16a; 16b), la pression de soufflage est accrue à 40 bars.

12. Procédé de production de récipients tubulaires (23) selon l'une des revendications 1 à 11, **caractérisé en ce qu'**une étiquette est insérée dans un moule de soufflage ouvert (16a; 16b).
